# EUROPEAN PATENT SPECIFICATION

(11) **EP 3 832 500 B1**
(45) Date of publication and mention of the grant of the patent: **21.06.2023**
(21) Application number: 21154589.2
(22) Date of filing: 05.05.2016
(51) Int. Cl.: G06F 17/16

(54) **DEVICE AND METHOD FOR PERFORMING VECTOR FOUR-FUNDAMENTAL-RULE OPERATION**
VORRICHTUNG UND VERFAHREN ZUR DURCHFÜHRUNG EINES VEKTORVORGANGS MIT VIER GRUNDREGELN
DISPOSITIF ET PROCÉDÉ POUR EFFECTUER UNE OPÉRATION VECTORIELLE À QUATRE RÈGLES FONDAMENTALES

(30) Priority: 26.04.2016 CN 201610266989
(43) Date of publication of application: 09.06.2021
(62) Divisional of application: 16899903.5
(73) Proprietor: Cambricon Technologies Corporation Limited, Beijing 100191 (CN)
(72) Inventor: Tao, Jinhua, Beijing, 100190 (CN); Zhi, Tian, Beijing, 100190 (CN); Liu, Shaoli, Beijing, 100190 (CN); Chen, Tianshi, Beijing, 100190 (CN); Chen, Yunji, Beijing, 100190 (CN)
(74) Representative: AWA Sweden AB

(56) References cited:
- US-A- 4 888 679
- US-B1- 6 282 634
- CHRISTOPHER H. CHOU ET AL: "VEGAS : soft vector processor with scratchpad memory", PROCEEDINGS OF THE 19TH ACM/SIGDA INTERNATIONAL SYMPOSIUM ON FIELD PROGRAMMABLE GATE ARRAYS, FPGA '11, 27 February 2011 (2011-02-27), page 15, XP055604359, New York, New York, USA DOI: 10.1145/1950413.1950420 ISBN: 978-1-4503-0554-9
- ZHIDUO LIU ET AL: "Accelerator compiler for the VENICE vector processor", PROCEEDINGS OF THE ACM/SIGDA INTERNATIONAL SYMPOSIUM ON FIELD PROGRAMMABLE GATE ARRAYS, FPGA '12, 22 February 2012 (2012-02-22), page 229, XP055604706, New York, New York, USA DOI: 10.1145/2145694.2145732 ISBN: 978-1-4503-1155-7
- AARON SEVERANCE ET AL: "VENICE: A compact vector processor for FPGA applications", FIELD-PROGRAMMABLE TECHNOLOGY (FPT), 2012 INTERNATIONAL CONFERENCE ON, IEEE, 10 December 2012 (2012-12-10), pages 261-268, XP032309717, DOI: 10.1109/FPT.2012.6412146 ISBN: 978-1-4673-2846-3

## Description

### TECHNICAL FIELD

The disclosure relates to a vector four-fundamental-rule operation device and a method for efficiently and flexibly performing a vector four-fundamental-rule operation according to a vector four-fundamental-rule operation instruction, which can well solve the problem that more and more algorithms of the current computer field contain a large number of vector four-fundamental-rule operations.

### BACKGROUND

In the current computer field, more and more algorithms are now involving vector operations. Taking machine learning algorithms, which are mainstream algorithms of artificial intelligence in popular application fields, as an example, almost all existing classical algorithms of the machine learning algorithms contain a large number of vector four-fundamental-rule operations including addition, subtraction, multiplication, and division of components of vectors. As an example, for two vectors *a* = [*a*₁, *a*₂*,..., a*ₙ] and *b* = [*b*₁*, b*₂*,..., b*ₙ]*,* a vector addition operation of the vectors *a* and *b* is defined as *a*+*b*=[*a*₁+*b*₁*, a*₂+*b*₂*,..., a*ₙ+*b*ₙ]*,* a vector subtraction operation of the vectors *a* and *b* is defined as *a-b =*[*a*₁-*b*₁*, a*₂*-b*₂*,..., a*ₙ*-b*ₙ]*,* a vector multiplication operation of the vectors *a* and *b* is defined as [*a*₁^{∗}*b*₁, *a*₂^{∗}*b*₂*,..., a*ₙ^{∗}*b*ₙ], and a vector division operation of the vectors *a* and *b* is defined as [*a*₁/*b*₁, *a*₂/*b*₂*,..., a*ₙ*lb*ₙ]*.*

In the prior art, one solution to conduct a vector four-fundamental-rule operation is to use general-purpose processors by executing general instructions via general-purpose register files and general-purpose functional units to perform a vector four-fundamental-rule operation. However, one defect of the solution is the low operation performance during a vector four-fundamental-rule operation because a single general-purpose processor is primarily used for scalar calculations. On the other hand, adopting multiple general-purpose processors for parallel execution may lead to a possible performance bottleneck resulting from the intercommunication among the multiple general-purpose processors. In another prior art, a vector calculation is conducted by adopting a graphics processing unit (GPU), where general-purpose register files and general-purpose stream processing units are configured to execute general single instruction multiple data (SIMD) instructions, thereby performing a vector four-fundamental-rule operation. Nonetheless, in the above-mentioned solution, the on-chip small cache of GPU in performing large-scale vector four-fundamental-rule operations requires a constant movement of off-chip data, which makes off-chip bandwidth a main performance bottleneck. In another prior art, a specialized vector four-fundamental-rule operation device is adopted to perform vector calculations, where customized register files and processing units are used to perform a vector four-fundamental-rule operation. Limited by the register files, however, the present specialized vector four-fundamental-rule operation device is unable to flexibly support four-fundamental-rule operations of vectors of different lengths.

CHRISTOPHER H. CHOU ET AL: "VEGAS : soft vector processor with scratchpad memory",PROCEEDINGS OF THE 19TH ACM/SIGDA INTERNATIONAL SYMPOSIUM ON FIELD PROGRAMMABLE GATE ARRAYS, DOI: 10.1145/1950413.1950420, discloses a vector processor using a scratchpad memory as vector data storage.

### SUMMARY

### (1) Technical problems to be solved

The disclosure aims to provide a vector four-fundamental-rule operation device and method to solve the problems existing in the prior art, such as limited inter-chip communication, insufficient on-chip cache, and inflexible support for different vector lengths.

### (2) Technical solutions

The disclosure provides a vector four-fundamental-rule operation device, which is configured to perform a vector four-fundamental-rule operation according to a vector four-fundamental-rule operation instruction. The device includes a storage unit, a register unit, and a vector four-fundamental-rule operation unit.

The storage unit is configured to store vectors.

The register unit is configured to store vector addresses, where the vector addresses are addresses in the storage unit where the vectors are stored.

The vector four-fundamental-rule operation unit is configured to acquire the vector four-fundamental-rule operation instruction, to acquire vector addresses from the register unit according to the vector four-fundamental-rule operation instruction, to acquire vectors from the storage unit according to the vector addresses acquired, and to perform the vector four-fundamental-rule operation on the vectors acquired to obtain a result of the vector four-fundamental-rule operation.

### (3) Technical effects

According to the vector four-fundamental-rule operation device and the method of the disclosure, vector data involved in calculation can be temporarily stored into a scratchpad memory. In the case of only transmitting a same instruction, data of different widths can be supported more flexibly and effectively in the vector four-fundamental-rule operation unit, and correlation problems in data storing can be solved, therefore the execution performance of a task including a large number of vector calculations can be improved. In addition, an instruction set adopted by the disclosure is convenient to use and flexible in supporting vectors of different lengths.

The disclosure can be applied to the following (including but not limited to) scenarios: a data processing device, a robot, a computer, a printer, a scanner, a telephone, a tablet, a smart terminal, a mobile phone, a driving recorder, a navigator, a sensor, a webcam, a cloud server, a camera, a video camera, a projector, a watch, headphones, a mobile storage, a wearable device, and other electronic products; an airplane, a ship, a car, and other vehicles; a television (TV), an air conditioner, a microwave oven, a refrigerator, an electric cooker, a humidifier, a washing machine, an electric lamp, a gas stove, a hood, and other home appliances; and a nuclear magnetic resonance spectrometer, a B-ultrasonic, an electrocardiograph, and other medical equipment.

### BRIEF DESCRIPTION OF THE DRAWINGS

FIG. 1 is a schematic structural diagram illustrating a vector four-fundamental-rule operation device according to an embodiment of the present disclosure.
FIG. 2 is a schematic diagram of a format of an instruction set according to an embodiment of the present disclosure.
FIG. 3 is a schematic structural diagram illustrating a vector four-fundamental-rule operation device according to an embodiment of the present disclosure.
FIG. 4 is a schematic flow diagram illustrating a method for performing a vector four-fundamental-rule operation instruction through a vector four-fundamental-rule operation device according to an embodiment of the present disclosure.
FIG. 5 is a schematic structural diagram illustrating a vector four-fundamental-rule operation unit according to an embodiment of the present disclosure.

### DETAILED DESCRIPTION

The disclosure provides a vector four-fundamental-rule operation device and a corresponding instruction set. The device includes a storage unit, a register unit, and a vector four-fundamental-rule operation unit. The storage unit is configured to store vectors. The register unit is configured to store addresses where the vectors are stored. The vector four-fundamental-rule operation unit is configured to acquire vector addresses from the register unit according to a vector four-fundamental-rule operation instruction, to acquire vectors from the storage unit according to the vector addresses acquired, and to perform a vector four-fundamental-rule operation on the vectors acquired to obtain a result of the vector four-fundamental-rule operation. According to the disclosure, vector data involved in calculation can be temporarily stored into a scratchpad memory, so that data of different widths can be supported more flexibly and effectively in a vector four-fundamental-rule operation process, and it is possible to improve the execution performance of a task including a large number of vector calculations. The invention is defined by the appended claims.

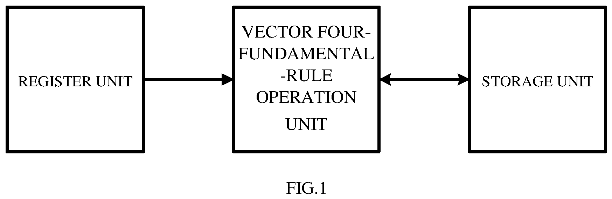

FIG. 1 is a schematic structural diagram illustrating a vector four-fundamental-rule operation device according to an embodiment of the present disclosure. As illustrated in FIG. 1, the device includes a storage unit, a register unit, and a vector four-fundamental-rule operation unit.

The storage unit is configured to store vectors. In an implementation, the storage unit can be a scratchpad memory capable of supporting vector data of different sizes. The disclosure is able to temporarily store required calculation data into a scratchpad memory, to enable the operation device to more flexibly and effectively support data of different widths during vector four-fundamental-rule operations. It may be understood that, the storage unit includes, but is not limited to, a variety of different memory devices, such as a static random access memory (SRAM), an enhanced dynamic random access memory (eDRAM), a dynamic random access memory (DRAM), a memristor, a 3D-DRAM, a non-transitory memory, or the like.

The register unit is configured to store vector addresses. The vector addresses are addresses in the storage unit where the vectors are stored. In an implementation, the register unit can be a scalar register file, to provide scalar registers required for an operation. It should be noted that, the scalar register is configured to store not only vector addresses but also scalar data. When an operation of a vector and a scalar is performed, the vector four-fundamental-rule operation unit acquires not only a vector address but also a corresponding scalar from the register unit. In some implementations, a plurality of register units are used to form a register file for storing a plurality of vector addresses and scalars.

The vector four-fundamental-rule operation unit is configured to acquire a vector four-fundamental-rule operation instruction, to acquire vector addresses from the register unit according to the vector four-fundamental-rule operation instruction, to acquire vectors from the storage unit according to the vector addresses acquired, to perform a vector four-fundamental-rule operation on the vectors acquired to obtain a result of the vector four-fundamental-rule operation, and to store the result of the vector four-fundamental-rule operation into the storage unit. In an implementation, the vector four-fundamental-rule operation unit includes a vector addition section, a vector subtraction section, a vector multiplication section, and a vector division section. In another implementation, the vector four-fundamental-rule operation unit has a structure of multiple-stage pipeline, where the vector addition section and the vector subtraction section are arranged in a first stage pipeline, and the vector multiplication section and the vector division section are arranged in a second stage pipeline. Due to the fact that the sections mentioned-above are arranged in different pipeline stages, when sequential order of a plurality of vector dot product operation instructions that are successive and serial is consistent with sequential order of pipeline stages of corresponding sections, operations as demanded by the serial of vector dot product operation instructions can be implemented more efficiently.

According to an implementation of the disclosure, the vector four-fundamental-rule operation device further includes an instruction cache unit. The instruction cache unit is configured to store vector four-fundamental-rule operation instructions to be executed. It should be understood that, one instruction (for example, a vector four-fundamental-rule operation instruction) will be cached in the instruction cache unit while being executed. After execution of an instruction is completed, if the instruction is also the earliest one among instructions that have not been submitted and are in the instruction cache unit, the instruction will be submitted. Once the instruction above is submitted, status change of the device (*i.e.*, the vector four-fundamental-rule operation device) caused by operations performed by the instruction cannot be cancelled. In an implementation, the instruction cache unit can be a reordering cache.

According to an implementation of the disclosure, the vector four-fundamental-rule operation device further includes an instruction processing unit. The instruction processing unit is configured to acquire a vector four-fundamental-rule operation instruction from the instruction cache unit, to process the vector four-fundamental-rule operation instruction acquired, and to provide the vector four-fundamental-rule operation instruction processed for the vector four-fundamental-rule operation unit. In an implementation, the instruction processing unit includes an instruction fetching module, a decoding module, and an instruction queue.

The instruction fetching module is configured to acquire the vector four-fundamental-rule operation instruction from the instruction cache unit.

The decoding module is configured to decode the vector four-fundamental-rule operation instruction acquired from the instruction cache unit.

The instruction queue is configured to sequentially store the vector four-fundamental-rule operation instruction decoded, and, considering that different instructions may have dependency relationships on registers included, to cache the vector four-fundamental-rule operation instruction decoded and then to send the vector four-fundamental-rule operation instruction cached when a dependency relationship is eliminated.

According to an implementation of the disclosure, the vector four-fundamental-rule operation device further includes a dependency relationship processing unit. The dependency relationship processing unit is configured to: determine whether the vector four-fundamental-rule operation instruction accesses a same vector as a previous vector four-fundamental-rule operation instruction, before the vector four-fundamental-rule operation unit acquires the vector four-fundamental-rule operation instruction; and store the vector four-fundamental-rule operation instruction into a storage queue based on a determination that the vector four-fundamental-rule operation instruction accesses the same vector as the previous vector four-fundamental-rule operation instruction, and provide the vector four-fundamental-rule operation instruction in the storage queue for the vector four-fundamental-rule operation unit after execution of the previous vector four-fundamental-rule operation instruction is completed; or provide the vector four-fundamental-rule operation instruction for the vector four-fundamental-rule operation unit directly, based on a determination that the vector four-fundamental-rule operation instruction does not access the same vector as the previous vector four-fundamental-rule operation instruction. As an example, when the vector four-fundamental-rule operation instruction accesses a scratchpad memory, the previous vector four-fundamental-rule operation instruction and the vector four-fundamental-rule operation instruction may access a same memory space. In order to ensure the correctness of an execution result of the vector four-fundamental-rule operation instruction, if data of the current vector four-fundamental-rule operation instruction is detected to have a dependency relationship with data of the previous vector four-fundamental-rule operation instruction, the vector four-fundamental-rule operation instruction must wait within the storage queue until the dependency relationship is eliminated.

According to an implementation of the disclosure, the vector four-fundamental-rule operation device further includes an input/output (I/O) unit. The I/O unit is configured to store the vectors into the storage unit, or to acquire the result of the vector four-fundamental-rule operation from the storage unit. In an implementation, the I/O unit can be a direct storage unit and responsible for reading vector data from or writing vector data into the memory.

The disclosure further provides a vector four-fundamental-rule operation method, which is configured to perform a vector four-fundamental-rule operation according to a vector four-fundamental-rule operation instruction. The method includes the following steps:
51, storing vectors;
S2, storing vector addresses, where the vector addresses indicate positions of the vectors stored during the step S1; and
S3, acquiring the vector four-fundamental-rule operation instruction, acquiring vector addresses according to the vector four-fundamental-rule operation instruction, then acquiring vectors according to the vector addresses acquired, and performing the vector four-fundamental-rule operation on the vectors acquired to obtain a result of the vector four-fundamental-rule operation.

According to an implementation of the disclosure, the method further includes the follows prior to the step S3:
storing a vector four-fundamental-rule operation instruction;
acquiring the vector four-fundamental-rule operation instruction;
decoding the vector four-fundamental-rule operation instruction acquired; and
sequentially storing the vector four-fundamental-rule operation instruction decoded.

According to an implementation of the disclosure, the method further includes the follows prior to the step S3:
determining whether the vector four-fundamental-rule operation instruction accesses a same vector as a previous vector four-fundamental-rule operation instruction; if the vector four-fundamental-rule operation instruction accesses the same vector as the previous vector four-fundamental-rule operation instruction, storing the vector four-fundamental-rule operation instruction into a storage queue, and advancing to the step S3 after execution of the previous vector four-fundamental-rule operation instruction is completed; otherwise, advancing to the step S3 directly.

According to an implementation of the disclosure, the method further includes a step of storing the result of the vector four-fundamental-rule operation.

According to an implementation of the disclosure, the step S1 includes a step of storing the vectors into a scratchpad memory.

According to an implementation of the disclosure, the vector four-fundamental-rule operation instruction includes an operation code and at least one operation field, where the operation code is configured to indicate a function of the vector four-fundamental-rule operation instruction, and the operation field is configured to indicate data information of the vector four-fundamental-rule operation instruction.

According to an implementation of the disclosure, the vector four-fundamental-rule operation includes an addition operation, a subtraction operation, a multiplication operation and a division operation.

According to an implementation of the disclosure, a vector four-fundamental-rule operation unit has a structure of multiple-stage pipeline, and the structure of multiple-stage pipeline includes a first stage pipeline and a second stage pipeline. In an implementation, the vector addition operation and the vector subtraction operation are performed at the first stage pipeline, and the vector multiplication operation and the vector division operation are performed at the second stage pipeline.

An instruction set of the present disclosure adopts a Load/Store structure, and the vector fundamental-rule operation unit does not operate on data stored in the memory. The instruction set adopts a simplified instruction set architecture and only provides the most basic vector fundamental-rule operations. Complex vector fundamental-rule operations are simulated by these simple instructions through combination thereof, making it possible to execute instructions in a single cycle at a high clock frequency. In addition, the instruction set also uses fixed-length instructions, so that the vector fundamental-rule operation device provided by the present disclosure fetches a next instruction in a decoding stage of a previous instruction.

In the process of performing a vector four-fundamental-rule operation, the vector four-fundamental-rule operation device obtains a vector four-fundamental-rule operation instruction for decoding, and then sends the vector four-fundamental-rule operation instruction decoded to the instruction queue for storing. The vector four-fundamental-rule operation device acquires parameters of the vector four-fundamental-rule operation instruction stored according to a decoding result. In an implementation, the parameters can be parameters which are directly written in an operation field of the vector four-fundamental-rule operation instruction, or can be parameters which are read from a specified register according to a register number of the operation field of the vector four-fundamental-rule operation instruction. One advantage of using a register to store the parameters is that there is no need to change the vector four-fundamental-rule operation instruction itself. As long as values of the register are changed by the vector four-fundamental-rule operation instruction, most of loops can be realized, which greatly decreases the number of instructions required to solve some practical problems. After all the parameters for operating are acquired, the dependency relationship processing unit determines whether the data to be used by the instruction is dependent on the previous instruction, the result of which determines whether the instruction can be immediately sent to the operation unit for execution. Once a dependency relationship is found between data of the vector four-fundamental-rule operation instruction and data of the previous vector four-fundamental-rule operation instruction, the vector four-fundamental-rule operation instruction must wait until execution of the depended previous vector four-fundamental-rule operation instruction is completed, and then the vector four-fundamental-rule operation instruction can be sent to the vector four-fundamental-rule operation unit for execution. In a specialized operation unit, the vector four-fundamental-rule operation instruction will be executed quickly, and a result, which is a result of a vector four-fundamental-rule operation, is written back to an address provided by the vector four-fundamental-rule operation instruction. In this situation, the execution of the vector four-fundamental-rule operation instruction is completed.

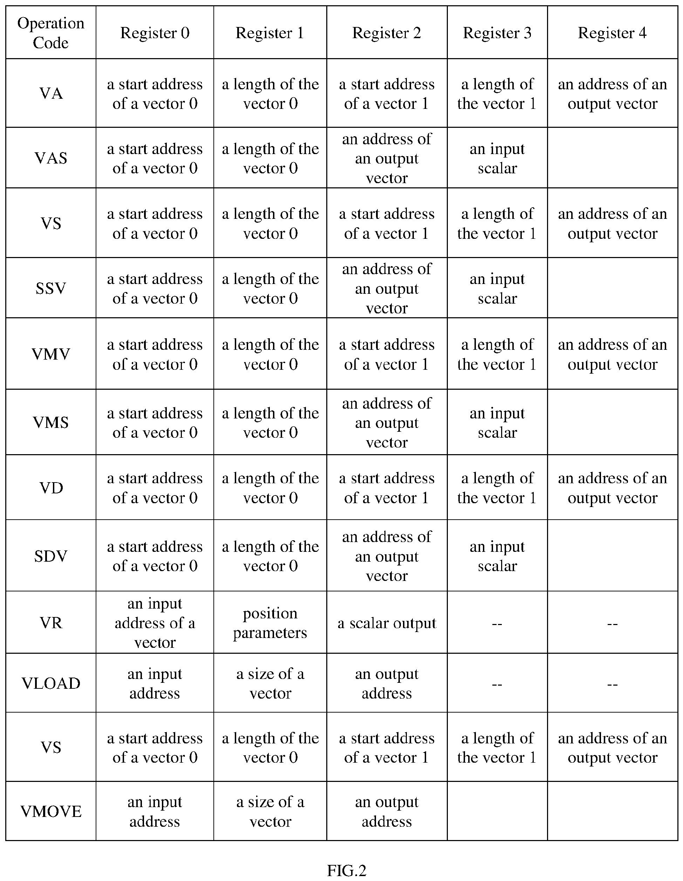

FIG. 2 is a schematic diagram of the format of an instruction set according to an embodiment of the present disclosure. As illustrated in FIG. 2, a vector four-fundamental-rule operation instruction includes an operation code and a plurality of operation fields. The operation code is configured to indicate a function of the vector four-fundamental-rule operation instruction, where the function may be an addition function, a subtraction function, a multiplication function, or a division function. That is, a vector four-fundamental-rule operation unit can perform a vector four-fundamental-rule operation by identifying the operation code. The operation field is configured to indicate data information of the vector four-fundamental-rule operation instruction, where the data information can be immediate data or a register number. For example, to acquire a vector, a start address and a length of the vector can be obtained from a register according to a register number, and then the vector stored in a corresponding address can be obtained from the storage unit according to the start address and the length of the vector.

The instruction set contains vector four-fundamental-rule operation instructions different in functions, including the following instructions.

A vector addition (VA) instruction: according to this instruction, a device (for example, the device can be a vector four-fundamental-rule operation device) is configured to respectively obtain two blocks of vector data of a specified size from specified addresses of a scratchpad memory. Then an addition operation is performed on the two blocks of vector data in a vector operation unit. Finally, a result is written back into a specified address of the scratchpad memory.

A vector-add-scalar (VAS) instruction: according to this instruction, a device is configured to obtain vector data of a specified size from a specified address of a scratchpad memory and scalar data from a specified address of a scalar register file. Then, in a scalar operation unit, a value of a scalar is added to each element of a vector. Finally, a result is written back into a specified address of the scratchpad memory.

A vector subtraction (VS) instruction: according to this instruction, a device is configured to respectively obtain two blocks of vector data of a specified size from specified addresses of a scratchpad memory. Then a subtraction operation is performed on the two blocks of vector data in a vector operation unit. Finally, a result is written back into a specified address of the scratchpad memory.

A scalar-subtract-vector (SSV) instruction: according to this instruction, a device is configured to obtain scalar data from a specified address of a scalar register file and vector data from a specified address of a scratchpad memory. Then, in a vector operation unit, subtract corresponding elements of a vector with a scalar. Finally, a result is written back into a specified address of the scratchpad memory.

A vector-multiply-vector (VMV) instruction: according to this instruction, a device is configured to respectively obtain two blocks of vector data of a specified size from specified addresses of a scratchpad memory. Then, in a vector operation unit, an element-wise multiplication operation is performed on the two blocks of vector data. Finally, a result is written back into a specified address of the scratchpad memory.

A vector-multiply-scalar (VMS) instruction: according to this instruction, a device is configured to obtain vector data of a specified size from a specified address of a scratchpad memory and scalar data of a specified size from a specified address of a scalar register file. Then a vector-multiply-scalar operation is performed (that is, a vector is multiplied by a scalar) in a vector operation unit. Finally, a result is written back into a specified address of the scratchpad memory.

A vector division (VD) instruction: according to this instruction, a device is configured to respectively obtain two blocks of vector data of a specified size from specified addresses of a scratchpad memory. Then, in a vector operation unit, an element-wise division operation is performed on the two blocks of vector data. Finally, a result is written back into a specified address of the scratchpad memory.

A scalar-divide-vector (SDV) instruction: according to this instruction, a device is configured to obtain scalar data from a specified address of a scalar register file and vector data of a specified size from a specified address of a scratchpad memory. Then, a vector operation unit divides a scalar by corresponding elements of a vector. Finally, a result is written back into a specified address of the scratchpad memory.

A vector retrieval (VR) instruction: according to this instruction, a device is configured to obtain a vector of a specified size from a specified address of a scratchpad memory. Then, in a vector operation unit, an element of a vector is extracted according to a specified position to serve as an output. Finally, a result is written back into a specified address of a scalar register file.

A vector load (VLOAD) instruction: according to this instruction, a device is configured to load vector data of a specified size from a specified external source address to a specified address of a scratchpad memory.

A vector storage (VS) instruction: according to this instruction, a device is configured to store vector data of a specified size from a specified address of a scratchpad memory into an external destination address.

A vector movement (VMOVE) instruction: according to this instruction, a device is configured to store (in other words, move) vector data of a specified size from a specified address of a scratchpad memory into another specified address of the scratchpad memory.

To illustrate objects, technical solutions, and technical effects of the disclosure more clearly, the disclosure will be further described in detail below with reference to specific embodiments of the disclosure and accompanying drawings.

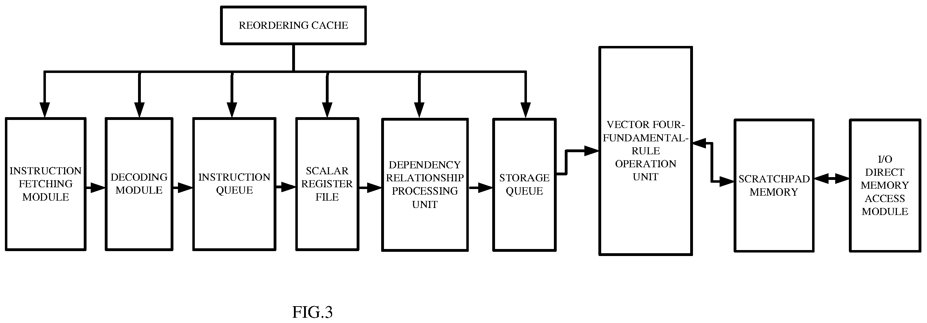

FIG. 3 is a schematic structural diagram illustrating a vector four-fundamental-rule operation device according to an embodiment of the present disclosure. As illustrated in FIG. 3, the vector four-fundamental-rule operation device includes an instruction fetching module, a decoding module, an instruction queue, a scalar register file, a dependency relationship processing unit, a storage queue, a reordering cache, a vector four-fundamental-rule operation unit, a scratchpad memory, and an input/output (I/O) direct memory access module.

The instruction fetching module is configured to fetch a next instruction to be executed from an instruction sequence, and to transmit the instruction fetched to the decoding module.

The decoding module is configured to decode the instruction transmitted, and to transmit the instruction decoded to the instruction queue.

Considering that different instructions may have dependency relationships on scalar registers included, the instruction queue is configured to cache the instruction decoded, and to transmit the instruction cached when a dependency relationship is eliminated.

The scalar register file is configured to provide scalar registers required by the vector four-fundamental-rule operation device during an operation.

For the dependency relationship processing unit, a vector four-fundamental-rule operation instruction processed by the dependency relationship processing unit may have a dependency relationship with a previous vector four-fundamental-rule operation instruction. When the vector four-fundamental-rule operation instruction accesses a scratchpad memory, the previous vector four-fundamental-rule operation instruction and the vector four-fundamental-rule operation instruction may access a same memory space. In order to ensure the correctness of an execution result of the vector four-fundamental-rule operation instruction, if data of the current vector four-fundamental-rule operation instruction is detected to have a dependency relationship with data of the previous vector four-fundamental-rule operation instruction, the current instruction must wait within the storage queue until the dependency relationship is eliminated.

The storage queue is a sequential queue, when the data of the vector four-fundamental-rule operation instruction has a dependency relationship with the data of the previous vector four-fundamental-rule operation instruction, the vector four-fundamental-rule operation instruction will be stored in the sequential queue until the dependency relationship is eliminated.

For the reordering cache, the vector four-fundamental-rule operation instruction is cached in the reordering cache while being executed. After execution of a vector four-fundamental-rule operation instruction is completed, if the vector four-fundamental-rule operation instruction is also the earliest one among instructions that have not been submitted and are in the reordering cache, the vector four-fundamental-rule operation instruction will be submitted. Once the vector four-fundamental-rule operation instruction is submitted, status change of the vector four-fundamental-rule operation device caused by operations performed by the vector four-fundamental-rule operation instruction cannot be cancelled.

The vector four-fundamental-rule operation unit is responsible for all vector four-fundamental-rule operations of the vector four-fundamental-rule operation device, and the vector four-fundamental-rule operation instruction is sent to the vector four-fundamental-rule operation unit for execution.

The scratchpad memory is a temporary storage device dedicated to vector data, and can support vector data of different sizes.

The I/O direct memory access module is configured to directly access the scratchpad memory and responsible for reading data from or writing data into the scratchpad memory.

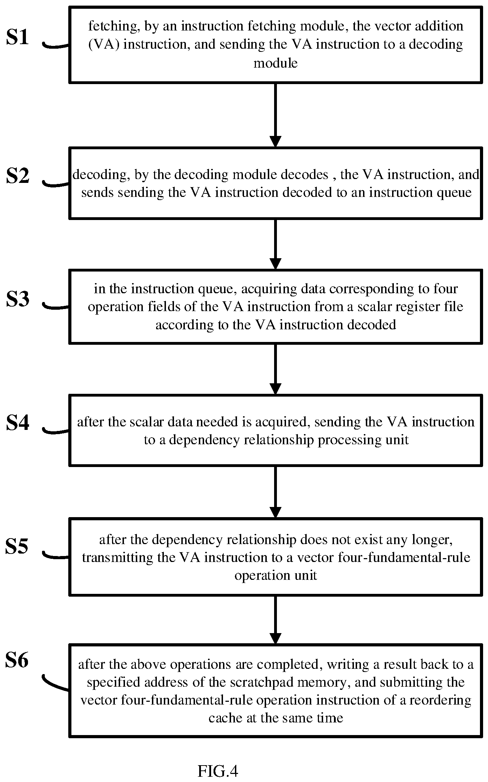

FIG. 4 is a schematic flow diagram illustrating a method for performing a vector four-fundamental-rule operation instruction through a vector four-fundamental-rule operation device according to an embodiment of the present disclosure. As illustrated in FIG. 4, a manner of performing a vector addition (VA) instruction includes the following steps.

Step S1, fetching, by an instruction fetching module, the vector addition (VA) instruction, and sending the VA instruction to a decoding module.

Step S2, decoding, by the decoding module, the VA instruction, and sending the VA instruction decoded to an instruction queue.

Step S3, in the instruction queue, acquiring data corresponding to four operation fields of the VA instruction from a scalar register file according to the VA instruction decoded. In an implementation, the data acquired from the scalar register file includes a start address of a vector *vin*₀*,* a length of the vector *vin*₀*,* a start address of a vector *vin*₁*,* and a length of the vector *vin*₁.

Step S4, after the scalar data needed is acquired, sending the VA instruction to a dependency relationship processing unit; analyzing, by the dependency relationship processing unit, whether there is a dependency relationship between data of the VA instruction and data of an uncompleted previous vector addition (VA) instruction. The VA instruction needs to wait (in other words, the VA instruction is cached) in a storage queue until there is no dependency relationship between the data of the VA instruction and the data of the uncompleted previous VA instruction.

Step S5, after the dependency relationship between the data of the VA instruction and the data of the uncompleted previous VA instruction does not exist any longer, transmitting the VA instruction to a vector four-fundamental-rule operation unit; obtaining, by the vector four-fundamental-rule operation unit, vectors needed from a scratchpad memory according to addresses and lengths of data needed, and then performing a vector addition operation in the vector four-fundamental-rule operation unit.

Step S6, after the above operations are completed, writing a result back to a specified address of the scratchpad memory, and submitting the vector four-fundamental-rule operation instruction of a reordering cache at the same time.

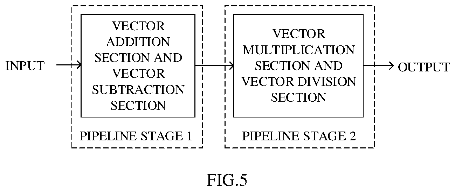

FIG. 5 is a schematic structural diagram illustrating a vector four-fundamental-rule operation unit according to an embodiment of the present disclosure. As illustrated in FIG. 5, the vector four-fundamental-rule operation unit includes vector four-fundamental-rule operation subunits. In addition, the vector four-fundamental-rule operation unit has a structure of multiple-stage pipeline.

In an implementation, a vector addition section and a vector subtraction section are arranged at a pipeline stage 1, and a vector multiplication section and a vector division section are arranged at a pipeline stage 2. Since these sections are arranged in different pipeline stages, when sequential order of a plurality of vector four-fundamental-rule operations that are successive and serial is consistent with sequential order of pipeline stages of corresponding sections, operations as demanded by the series of vector four-fundamental-rule operation instructions can be achieved more effectively.

Although the objects, technical solutions and technical effects of the present disclosure have been described in detail according to certain embodiments, it should be understood that the disclosure is not to be limited to the disclosed embodiments, but, on the contrary, is intended to cover various modifications and equivalent arrangements included within the scope of the appended claims. The scope is to be accorded the broadest interpretation so as to encompass all such modifications and equivalent structures as is permitted under the law.

## Claims

1. A vector four-fundamental-rule operation device, configured to perform a vector four-fundamental-rule operation according to a vector four-fundamental-rule operation instruction, the device comprising:
a storage unit, configured to store vectors, wherein the storage unit is a scratchpad memory capable of supporting vectors of different sizes;
a register unit, configured to store vector addresses, wherein the vector addresses are addresses in the storage unit where the vectors are stored;
a vector four-fundamental-rule operation unit, configured to acquire the vector four-fundamental-rule operation instruction, to acquire vector addresses from the register unit according to the vector four-fundamental-rule operation instruction, to acquire vectors from the storage unit according to the vector addresses acquired, and to perform the vector four-fundamental-rule operation on the vectors acquired to obtain a result of the vector four-fundamental-rule operation; and
a dependency relationship processing unit configured to:
determine whether the vector four-fundamental-rule operation instruction accesses a same vector as a previous vector four-fundamental-rule operation instruction, before the vector four-fundamental-rule operation unit acquires the vector four-fundamental-rule operation instruction; and
store the vector four-fundamental-rule operation instruction into a storage queue based on a determination that the vector four-fundamental-rule operation instruction accesses the same vector as the previous vector four-fundamental-rule operation instruction, and provide the vector four-fundamental-rule operation instruction in the storage queue for the vector four-fundamental-rule operation unit after execution of the previous vector four-fundamental-rule operation instruction is completed; or
provide the vector four-fundamental-rule operation instruction for the vector four-fundamental-rule operation unit directly, based on a determination that the vector four-fundamental-rule operation instruction does not access the same vector as the previous vector four-fundamental-rule operation instruction.

2. The device of claim 1, further comprising:
an instruction cache unit, configured to store vector four-fundamental-rule operation instructions to be executed.

3. The device of claim 2, further comprising:
an instruction processing unit, configured to acquire a vector four-fundamental-rule operation instruction from the instruction cache unit, to process the vector four-fundamental-rule operation instruction acquired from the instruction cache unit, and to provide the vector four-fundamental-rule operation instruction processed for the vector four-fundamental-rule operation unit.

4. The device of claim 3, wherein the instruction processing unit comprises:
an instruction fetching module, configured to acquire the vector four-fundamental-rule operation instruction from the instruction cache unit;
a decoding module, configured to decode the vector four-fundamental-rule operation instruction acquired from the instruction cache unit; and
an instruction queue, configured to sequentially store the vector four-fundamental-rule operation instruction decoded.

5. The device of claim 1, wherein
the storage unit is further configured to store the result of the vector four-fundamental-rule operation; and
the device further comprises an input/output, I/O, unit, configured to store the vectors into the storage unit, or to acquire the result of the vector four-fundamental-rule operation from the storage unit.

6. The device of claim 1, wherein the vector four-fundamental-rule operation instruction comprises:
an operation code; and
at least one operation field;
wherein the operation code is configured to indicate a function of the vector four-fundamental-rule operation instruction;
wherein the operation field is configured to indicate data information of the vector four-fundamental-rule operation instruction; and
the data information comprises a register unit number, and the vector four-fundamental-rule operation unit is configured to access a register unit and to acquire a vector address according to the register unit number.

7. The device of claim 1, wherein
the vector four-fundamental-rule operation unit comprises a vector addition section, a vector subtraction section, a vector multiplication section, and a vector division section; and
the vector four-fundamental-rule operation unit has a structure of multiple-stage pipeline, and the structure of multiple-stage pipeline comprises a first stage pipeline and a second stage pipeline; wherein the vector addition section and the vector subtraction section are arranged in the first stage pipeline, and the vector multiplication section and the vector division section are arranged in the second stage pipeline.

8. The device of claim 1, wherein the vector four-fundamental-rule operation instruction comprises at least one of following instructions:
a vector addition, VA, instruction, wherein the device is configured to respectively retrieve two blocks of vector data of a respective specified size from specified addresses of the storage unit, and to perform an addition operation on the two blocks of vector data in a vector operation unit, and to write back a result into a specified address of the storage unit, according to said instruction;
a vector-add-scalar, VAS instruction, wherein the device is configured to retrieve vector data of a respective specified size from a specified address of the storage unit, to retrieve scalar data from a specified address of a scalar register file, to add a value of a scalar to each element of a vector in a scalar operation unit, to write back a result into a specified address of the storage unit, according to said instruction;
a vector subtraction, VS, instruction, wherein the device is configured to respectively retrieve two blocks of vector data of a respective specified size from specified addresses of the storage unit, to perform a subtraction operation on the two blocks of vector data in a vector operation unit, and to write back a result into a specified address of the storage unit, according to said instruction;
a scalar-subtract-vector, SSV instruction, wherein the device is configured to retrieve scalar data from a specified address of a scalar register file and to retrieve vector data from a specified address of the storage unit, to subtract corresponding elements of a vector with a scalar in a vector operation unit, to write back a result into a specified address of the storage unit, according to said instruction;
a vector-multiply-vector, VMV, instruction, wherein the device is configured to respectively retrieve two blocks of vector data of a respective specified size from specified addresses of the storage unit, to perform an element-wise multiplication operation on the two blocks of vector data in a vector operation unit, and to write back a result into a specified address of the storage unit, according to said instruction;
a vector-multiply-scalar, VMS, instruction, wherein the device is configured to retrieve vector data of a respective specified size from a specified address of the storage unit and to retrieve scalar data of a specified size from a specified address of a scalar register file, to perform a vector-multiply-scalar operation in a vector operation unit, and to write back a result into a specified address of the storage unit, according to said instruction;
a vector division, VD, instruction, wherein the device is configured to respectively retrieve two blocks of vector data of a respective specified size from specified addresses of the storage unit, to perform an element-wise division operation on the two blocks of vector data in a vector operation unit, and to write back a result into a specified address of the storage unit, according to said instruction; and
a scalar-divide-vector, SDV, instruction, wherein the device is configured to retrieve scalar data from a specified address of a scalar register file and to retrieve vector data of a respective specified size from a specified address of the storage unit, to divide a scalar by corresponding elements of a vector in a vector operation unit, and to write back a result into a specified address of the storage unit, according to said instruction.

9. The device of claim 8,
wherein the vector addition, VA, instruction comprises one operation code, and five operation fields comprising five register unit numbers, for obtaining a start address of a vector 0, a length of the vector 0, a start address of a vector 1, a length of the vector 1, and an address of an output vector, respectively;
wherein the vector-add-scalar, VAS instruction comprises one operation code, and four operation fields comprising four register unit numbers, for obtaining a start address of a vector 0, a length of the vector 0, an address of an output vector, and an input scalar, respectively;
wherein the vector subtraction, VS, instruction comprises one operation code, and five operation fields comprising five register unit numbers, for obtaining a start address of a vector 0, a length of the vector 0, a start address of a vector 1, a length of the vector 1, and an address of an output vector, respectively;
wherein the scalar-subtract-vector, SSV instruction comprises one operation code, and four operation fields comprising four register unit numbers, for obtaining a start address of a vector 0, a length of the vector 0, an address of an output vector, and an input scalar, respectively;
wherein the vector-multiply-vector, VMV, instruction comprises one operation code, and five operation fields comprising five register unit numbers, for obtaining a start address of a vector 0, a length of the vector 0, a start address of a vector 1, a length of the vector 1, and an address of an output vector, respectively;
wherein the vector-multiply-scalar, VMS, instruction comprises one operation code, and four operation fields comprising four register unit numbers, for obtaining a start address of a vector 0, a length of the vector 0, an address of an output vector, and an input scalar, respectively;
wherein the vector division, VD, instruction comprises one operation code, and five operation fields comprising five register unit numbers, for obtaining a start address of a vector 0, a length of the vector 0, a start address of a vector 1, a length of the vector 1, and an address of an output vector, respectively; and
wherein the scalar-divide-vector, SDV, instruction comprises one operation code, and four operation fields comprising four register unit numbers, for obtaining a start address of a vector 0, a length of the vector 0, an address of an output vector, and an input scalar, respectively.

10. A vector four-fundamental-rule operation method, configured to perform a vector four-fundamental-rule operation according to a vector four-fundamental-rule operation instruction, the method comprising:
S1, storing vectors by using a storage unit, wherein the storage unit is a scratchpad memory capable of supporting vectors of different sizes;
S2, storing vector addresses by using a register unit, wherein the vector addresses are addresses in the storage unit were the vectors are stored; and
S3, by using a vector four-fundamental-rule operation unit, acquiring the vector four-fundamental-rule operation instruction, acquiring vector addresses from the register unit
according to the vector four-fundamental-rule operation instruction, acquiring vectors from the storage unit according to the vector addresses acquired, and performing the vector four-fundamental-rule operation on the vectors acquired to obtain a result of the vector four-fundamental-rule operation;
wherein the method further comprises, prior to the step S3, by using a dependency relationship processing unit:
determining whether the vector four-fundamental-rule operation instruction accesses a same vector as a previous vector four-fundamental-rule operation instruction; and
storing the vector four-fundamental-rule operation instruction into a storage queue based on a determination that the vector four-fundamental-rule operation instruction accesses the same vector as the previous vector four-fundamental-rule operation instruction, and advancing to the step S3 after execution of the previous vector four-fundamental-rule operation instruction is completed; or
advancing to the step S3 directly, based on a determination that the vector four-fundamental-rule operation instruction does not access the same vector as the previous vector four-fundamental-rule operation instruction..

11. The method of claim 10, further comprising the following steps prior to the step S3:
storing vector four-fundamental-rule operation instructions by using an instruction cache unit;
acquiring, by using an instruction processing unit, a vector four-fundamental-rule operation instruction from the vector four-fundamental-rule operation instructions stored;
decoding, by using a decoding module, the vector four-fundamental-rule operation instruction acquired; and
sequentially storing the vector four-fundamental-rule operation instruction decoded.

12. The method of claim 10, further comprising:
storing the result of the vector four-fundamental-rule operation by using the storage unit.

13. The method of claim 10, wherein the vector four-fundamental-rule operation instruction comprises an operation code and at least one operation field; wherein the operation code is configured to indicate a function of the vector four-fundamental-rule operation instruction, the operation field is configured to indicate data information of the vector four-fundamental-rule operation instruction, and the vector four-fundamental-rule operation instruction comprises at least one of following instructions:
a vector addition, VA, instruction, wherein the method further comprising
respectively retrieving two blocks of vector data of a specified size from specified addresses of the storage unit,
performing an addition operation on the two blocks of vector data in a vector operation unit, and
writing back a result into a specified address of the storage unit, according to said instruction;
a vector-add-scalar, VAS instruction, wherein the method further comprising
retrieving vector data of a specified size from a specified address of the storage unit, retrieving scalar data from a specified address of a scalar register file,
adding a value of a scalar to each element of a vector in a scalar operation unit,
writing back a result into a specified address of the storage unit, according to said instruction;
a vector subtraction, VS, instruction, wherein the method further comprising
respectively retrieving two blocks of vector data of a specified size from specified addresses of the storage unit,
performing a subtraction operation on the two blocks of vector data in a vector operation unit, and
writing back a result into a specified address of the storage unit, according to said instruction;
a scalar-subtract-vector, SSV instruction, wherein the method further comprising
retrieving scalar data from a specified address of a scalar register file and retrieving vector data from a specified address of the storage unit,
subtracting corresponding elements of a vector with a scalar in a vector operation unit,
writing back a result into a specified address of the storage unit, according to said instruction;
a vector-multiply-vector, VMV, instruction, wherein the method further comprising
respectively retrieving two blocks of vector data of a specified size from specified addresses of the storage unit,
performing an element-wise multiplication operation on the two blocks of vector data in a vector operation unit, and
writing back a result into a specified address of the storage unit, according to said instruction;
a vector-multiply-scalar, VMS, instruction, wherein the method further comprising
retrieving vector data of a specified size from a specified address of the storage unit and retrieving scalar data of a specified size from a specified address of a scalar register file,
performing a vector-multiply-scalar operation in a vector operation unit, and
writing back a result into a specified address of the storage unit, according to said instruction;
a vector division, VD, instruction, wherein the method further comprising
respectively retrieving two blocks of vector data of a specified size from specified addresses of the storage unit,
performing an element-wise division operation on the two blocks of vector data in a vector operation unit, and
writing back a result into a specified address of the storage unit, according to said instruction; and
a scalar-divide-vector, SDV, instruction, wherein the method further comprising
retrieving scalar data from a specified address of a scalar register file and retrieving vector data of a specified size from a specified address of the storage unit,
dividing a scalar by corresponding elements of a vector in a vector operation unit, and
writing back a result into a specified address of the storage unit, according to said instruction.

14. The method of claim 13,
wherein the vector addition, VA, instruction comprises one operation code, and five operation fields corresponding to a start address of a vector 0, a length of the vector 0, a start address of a vector 1, a length of the vector 1, and an address of an output vector, respectively;
wherein the vector-add-scalar, VAS instruction comprises one operation code, and four operation fields corresponding to a start address of a vector 0, a length of the vector 0, an address of an output vector, and an input scalar, respectively;
wherein the vector subtraction, VS, instruction comprises one operation code, and five operation fields corresponding to a start address of a vector 0, a length of the vector 0, a start address of a vector 1, a length of the vector 1, and an address of an output vector, respectively;
wherein the scalar-subtract-vector, SSV instruction comprises one operation code, and four operation fields corresponding to a start address of a vector 0, a length of the vector 0, an address of an output vector, and an input scalar, respectively;
wherein the vector-multiply-vector, VMV, instruction comprises one operation code, and five operation fields corresponding to a start address of a vector 0, a length of the vector 0, a start address of a vector 1, a length of the vector 1, and an address of an output vector, respectively;
wherein the vector-multiply-scalar, VMS, instruction comprises one operation code, and four operation fields corresponding to a start address of a vector 0, a length of the vector 0, an address of an output vector, and an input scalar, respectively;
wherein the vector division, VD, instruction comprises one operation code, and five operation fields corresponding to a start address of a vector 0, a length of the vector 0, a start address of a vector 1, a length of the vector 1, and an address of an output vector, respectively; and
wherein the scalar-divide-vector, SDV, instruction comprises one operation code, and four operation fields corresponding to a start address of a vector 0, a length of the vector 0, an address of an output vector, and an input scalar, respectively.

## Patentansprüche

1. Vektor-Vier-Grundregel-Operationsvorrichtung, die dafür konfiguriert ist, eine Vektor-Vier-Grundregel-Operation gemäß einer Vektor-Vier-Grundregel-Operationsinstruktion durchzuführen, wobei die Vorrichtung umfasst:
eine Speichereinheit, die zum Speichern von Vektoren konfiguriert ist, wobei die Speichereinheit ein Scratchpad-Speicher ist, der Vektoren unterschiedlicher Größe unterstützen kann;
eine Registereinheit, die zum Speichern von Vektoradressen konfiguriert ist, wobei die Vektoradressen Adressen in der Speichereinheit sind, wo die Vektoren gespeichert sind;
eine Vektor-Vier-Grundregel-Operationseinheit, die dafür konfiguriert ist, die Vektor-Vier-Grundregel-Operationsinstruktion zu erfassen, Vektoradressen aus der Registereinheit gemäß der Vektor-Vier-Grundregel-Operationsinstruktion zu erfassen, Vektoren aus der Speichereinheit gemäß den erfassten Vektoradressen zu erfassen, und die Vektor-Vier-Grundregel-Operation an den erfassten Vektoren durchzuführen, um ein Ergebnis der Vektor-Vier-Grundregel-Operation zu erhalten; und
eine Abhängigkeitsbeziehungs-Verarbeitungseinheit, die konfiguriert ist zum:
Bestimmen, ob die Vektor-Vier-Grundregel-Operationsinstruktion auf einen selben Vektor zugreift wie eine vorherige Vektor-Vier-Grundregel-Operationsinstruktion, bevor die Vektor-Vier-Grundregel-Operationseinheit die Vektor-Vier-Grundregel-Operationsinstruktion erfasst; und
Speichern der Vektor-Vier-Grundregel-Operationsinstruktion in einer Speicherwarteschlange auf der Grundlage einer Bestimmung, dass die Vektor-Vier-Grundregel-Operationsinstruktion auf denselben Vektor zugreift wie die vorherige Vektor-Vier-Grundregel-Operationsinstruktion, und Bereitstellen der Vektor-Vier-Grundregel-Operationsinstruktion in der Speicherwarteschlange für die Vektor-Vier-Grundregel-Operationseinheit, nachdem die Ausführung der vorherigen Vektor-Vier-Grundregel-Operationsinstruktion abgeschlossen ist; oder
direktes Übermitteln der Vektor-Vier-Grundregel-Operationsinstruktion an die Vektor-Vier-Grundregel-Operationseinheit auf der Grundlage einer Bestimmung, dass die Vektor-Vier-Grundregel-Operationsinstruktion nicht auf denselben Vektor zugreift wie die vorherige Vektor-Vier-Grundregel-Operationsinstruktion.

2. Vorrichtung nach Anspruch 1, die des Weiteren umfasst:
eine Instruktions-Cache-Einheit, die dafür konfiguriert ist, auszuführende Vektor-Vier-Grundregel-Operationsinstruktionen zu speichern.

3. Vorrichtung nach Anspruch 2, die des Weiteren umfasst:
eine Instruktionsverarbeitungseinheit, die dafür konfiguriert ist, eine Vektor-Vier-Grundregel-Operationsinstruktion aus der Instruktions-Cache-Einheit zu erfassen, die aus der Instruktions-Cache-Einheit erfassten Vektor-Vier-Grundregel-Operationsinstruktion zu verarbeiten, und die verarbeitete Vektor-Vier-Grundregel-Operationsinstruktion für die Vektor-Vier-Grundregel-Operationseinheit bereitzustellen.

4. Vorrichtung nach Anspruch 3, wobei die Instruktionsverarbeitungseinheit umfasst:
ein Instruktionsholmodul, das dafür konfiguriert ist, die Vektor-Vier-Grundregel-Operationsinstruktion aus der Instruktions-Cache-Einheit zu erfassen;
ein Decodiermodul, das dafür konfiguriert ist, die aus der Instruktions-Cache-Einheit erfasste Vektor-Vier-Grundregel-Operationsinstruktion zu decodieren; und
eine Instruktionswarteschlange, die dafür konfiguriert ist, die decodierte Vektor-Vier-Grundregel-Operationsinstruktion sequentiell zu speichern.

5. Vorrichtung nach Anspruch 1, wobei
die Speichereinheit des Weiteren dafür konfiguriert ist, das Ergebnis der Vektor-Vier-Grundregel-Operation zu speichern; und
die Vorrichtung des Weiteren eine Eingabe/Ausgabe (E/A)-Einheit umfasst, die dafür konfiguriert ist, die Vektoren in der Speichereinheit zu speichern oder das Ergebnis der Vektor-Vier-Grundregel-Operation aus der Speichereinheit zu erfassen.

6. Vorrichtung nach Anspruch 1, wobei die Vektor-Vier-Grundregel-Operationsinstruktion umfasst:
einen Operationscode; und
mindestens ein Operationsfeld;
wobei der Operationscode dafür konfiguriert ist, eine Funktion der Vektor-Vier-Grundregel-Operationsinstruktion anzugeben;
wobei das Operationsfeld dafür konfiguriert ist, Dateninformationen der Vektor-Vier-Grundregel-Operationsinstruktion anzugeben; und
die Dateninformationen eine Registereinheitsnummer umfassen, und die Vektor-Vier-Grundregel-Operationseinheit dafür konfiguriert ist, auf eine Registereinheit zuzugreifen und eine Vektoradresse gemäß der Registereinheitsnummer zu erfassen.

7. Vorrichtung nach Anspruch 1, wobei
die Vektor-Vier-Grundregel-Operationseinheit einen Vektoradditionsabschnitt, einen Vektorsubtraktionsabschnitt, einen Vektormultiplikationsabschnitt und einen Vektordivisionsabschnitt umfasst; und
die Vektor-Vier-Grundregel-Operationseinheit eine Struktur einer mehrstufigen Pipeline aufweist, und die Struktur der mehrstufigen Pipeline eine Pipeline der ersten Stufe und eine Pipeline der zweiten Stufe umfasst; wobei der Vektoradditionsabschnitt und der Vektorsubtraktionsabschnitt in der Pipeline der ersten Stufe angeordnet sind, und der Vektormultiplikationsabschnitt und der Vektordivisionsabschnitt in der Pipeline der zweiten Stufe angeordnet sind.

8. Vorrichtung nach Anspruch 1, wobei die Vektor-Vier-Grundregel-Operationsinstruktion mindestens eine der folgenden Instruktionen umfasst:
eine Vektoradditions (VA)-Instruktion, wobei die Vorrichtung dafür konfiguriert ist, gemäß der Instruktion jeweils zwei Blöcke von Vektordaten einer jeweiligen spezifizierten Größe von spezifizierten Adressen der Speichereinheit abzurufen und eine Additionsoperation an den zwei Blöcken von Vektordaten in einer Vektoroperationseinheit durchzuführen und ein Ergebnis in eine spezifizierte Adresse der Speichereinheit zurückzuschreiben;
eine Vektor-Addier-Skalar (VA)-Instruktion, wobei die Vorrichtung dafür konfiguriert ist, gemäß der Instruktion Vektordaten einer jeweiligen spezifizierten Größe von einer spezifizierten Adresse der Speichereinheit abzurufen, skalare Daten von einer spezifizierten Adresse einer Skalarregisterdatei abzurufen, einen Wert eines Skalars zu jedem Element eines Vektors in einer Skalaroperationseinheit zu addieren, und ein Ergebnis in eine spezifizierte Adresse der Speichereinheit zurückzuschreiben;
eine Vektorsubtraktions (VS)-Instruktion, wobei die Vorrichtung dafür konfiguriert ist, gemäß der Instruktion jeweils zwei Blöcke von Vektordaten einer jeweiligen spezifizierten Größe von spezifizierten Adressen der Speichereinheit abzurufen, eine Subtraktionsoperation an den zwei Blöcken von Vektordaten in einer Vektoroperationseinheit durchzuführen, und ein Ergebnis in eine spezifizierte Adresse der Speichereinheit zurückzuschreiben;
einen Skalar-Subtrahier-Vektor (SSV)-Instruktion, wobei die Vorrichtung dafür konfiguriert ist, gemäß der Instruktion skalare Daten von einer spezifizierten Adresse einer Skalarregisterdatei abzurufen und Vektordaten von einer spezifizierten Adresse der Speichereinheit abzurufen, entsprechende Elemente eines Vektors mit einem Skalar in einer Vektoroperationseinheit zu subtrahieren, und ein Ergebnis in eine spezifizierte Adresse der Speichereinheit zurückzuschreiben;
eine Vektor-Multiplizier-Vektor (VMV)-Instruktion, wobei die Vorrichtung dafür konfiguriert ist, gemäß der Instruktion jeweils zwei Blöcke von Vektordaten einer jeweiligen spezifizierten Größe von spezifizierten Adressen der Speichereinheit abzurufen, eine elementweise Multiplikationsoperation an den zwei Blöcken von Vektordaten in einer Vektoroperationseinheit durchzuführen, und ein Ergebnis in eine spezifizierte Adresse der Speichereinheit zurückzuschreiben;
eine Vektor-Multiplizier-Skalar (VMS)-Instruktion, wobei die Vorrichtung dafür konfiguriert ist, gemäß der Instruktion Vektordaten einer jeweiligen spezifizierten Größe von einer spezifizierten Adresse der Speichereinheit abzurufen und skalare Daten einer spezifizierten Größe von einer spezifizierten Adresse einer Skalarregisterdatei abzurufen, eine Vektor-Multiplizier-Skalar-Operation in einer Vektoroperationseinheit durchzuführen, und ein Ergebnis in eine spezifizierte Adresse der Speichereinheit zurückzuschreiben;
eine Vektordivisions (VD)-Instruktion, wobei die Vorrichtung dafür konfiguriert ist, gemäß der Instruktion jeweils zwei Blöcke von Vektordaten einer jeweiligen spezifizierten Größe von spezifizierten Adressen der Speichereinheit abzurufen, eine elementweise Divisionsoperation an den zwei Blöcken von Vektordaten in einer Vektor-Operationseinheit durchzuführen, und ein Ergebnis in eine spezifizierte Adresse der Speichereinheit zurückzuschreiben; und
eine Skalar-Dividier-Vektor (SDV)-Instruktion, wobei die Vorrichtung dafür konfiguriert ist, gemäß der Instruktion skalare Daten von einer spezifizierten Adresse einer Skalarregisterdatei abzurufen und Vektordaten einer entsprechenden spezifizierten Größe von einer spezifizierten Adresse der Speichereinheit abzurufen, einen Skalar durch entsprechende Elemente eines Vektors in einer Vektoroperationseinheit zu dividieren, und ein Ergebnis in eine spezifizierte Adresse der Speichereinheit zurückzuschreiben.

9. Vorrichtung nach Anspruch 8,
wobei die Vektoradditions (VA)-Instruktion einen einzelnen Operationscode und fünf Operationsfelder mit fünf Registereinheitsnummern umfasst, um eine Startadresse eines Vektors 0, eine Länge des Vektors 0, eine Startadresse eines Vektors 1, eine Länge des Vektors 1 bzw. eine Adresse eines Ausgangsvektors zu erhalten;
wobei die Vektor-Addier-Skalar (VAS)-Instruktion einen einzelnen Operationscode und vier Operationsfelder mit vier Registereinheitsnummern umfasst, um eine Startadresse eines Vektors 0, eine Länge des Vektors 0, eine Adresse eines Ausgangsvektors bzw. einen Eingangsskalar zu erhalten;
wobei die Vektorsubtraktions (VS)-Instruktion einen einzelnen Operationscode und fünf Operationsfelder mit fünf Registereinheitsnummern umfasst, um eine Startadresse eines Vektors 0, eine Länge des Vektors 0, eine Startadresse eines Vektors 1, eine Länge des Vektors 1 bzw. eine Adresse eines Ausgangsvektors zu erhalten;
wobei die Skalar-Subtrahier-Vektor (SSV)-Instruktion einen einzelnen Operationscode und vier Operationsfelder mit vier Registereinheitsnummern umfasst, um eine Startadresse eines Vektors 0, eine Länge des Vektors 0, eine Adresse eines Ausgangsvektors bzw. einen Eingangsskalar zu erhalten;
wobei die Vektor-Multiplizier-Vektor (VMV)-Instruktion einen einzelnen Operationscode und fünf Operationsfelder mit fünf Registereinheitsnummern umfasst, um eine Startadresse eines Vektors 0, eine Länge des Vektors 0, eine Startadresse eines Vektors 1, eine Länge des Vektors 1 bzw. eine Adresse eines Ausgangsvektors zu erhalten;
wobei die Vektor-Multiplizier-Skalar (VMS)-Instruktion einen einzelnen Operationscode und vier Operationsfelder mit vier Registereinheitsnummern umfasst, um eine Startadresse eines Vektors 0, eine Länge des Vektors 0, eine Adresse eines Ausgangsvektors bzw. einen Eingangsskalar zu erhalten;
wobei die Vektordivisions (VD)-Instruktion einen einzelnen Operationscode und fünf Operationsfelder mit fünf Registereinheitsnummern umfasst, um eine Startadresse eines Vektors 0, eine Länge des Vektors 0, eine Startadresse eines Vektors 1, eine Länge des Vektors 1 bzw. eine Adresse eines Ausgangsvektors zu erhalten; und
wobei die Skalar-Dividier-Vektor (SDV)-Instruktion einen einzelnen Operationscode und vier Operationsfelder mit vier Registereinheitsnummern umfasst, um eine Startadresse eines Vektors 0, eine Länge des Vektors 0, eine Adresse eines Ausgangsvektors bzw. einen Eingangsskalar zu erhalten.

10. Vektor-Vier-Grundregel-Operationsverfahren, das dafür konfiguriert ist, eine Vektor-Vier-Grundregel-Operation gemäß einer Vektor-Vier-Grundregel-Operationsinstruktion durchzuführen, wobei das Verfahren umfasst:
S1, Speichern von Vektoren unter Verwendung einer Speichereinheit, wobei die Speichereinheit ein Scratchpad-Speicher ist, der Vektoren unterschiedlicher Größe unterstützen kann;
S2, Speichern von Vektoradressen unter Verwendung einer Registereinheit, wobei die Vektoradressen Adressen in der Speichereinheit sind, wo die Vektoren gespeichert sind; und
S3, unter Verwendung einer Vektor-Vier-Grundregel-Operationseinheit, Erfassen der Vektor-Vier-Grundregel-Operationsinstruktion, Erfassen von Vektoradressen aus der Registereinheit gemäß der Vektor-Vier-Grundregel-Operationsinstruktion, Erfassen von Vektoren aus der Speichereinheit gemäß den erfassten Vektoradressen, und Durchführen der Vektor-Vier-Grundregel-Operation an den erfassten Vektoren, um ein Ergebnis der Vektor-Vier-Grundregel-Operation zu erhalten;
wobei das Verfahren des Weiteren vor dem Schritt S3 unter Verwendung einer Abhängigkeitsbeziehungs-Verarbeitungseinheit umfasst:
Bestimmen, ob die Vektor-Vier-Grundregel-Operationsinstruktion auf einen selben Vektor zugreift wie eine vorherige Vektor-Vier-Grundregel-Operationsinstruktion; und
Speichern der Vektor-Vier-Grundregel-Operationsinstruktion in einer Speicherwarteschlange auf der Grundlage einer Bestimmung, dass die Vektor-Vier-Grundregel-Operationsinstruktion auf denselben Vektor zugreift wie die vorherige Vektor-Vier-Grundregel-Operationsinstruktion, und Voranschreiten zu Schritt S3, nachdem die Ausführung der vorherigen Vektor-Vier-Grundregel-Operationsinstruktion abgeschlossen ist; oder
direktes Voranschreiten zum Schritt S3 auf der Grundlage der Bestimmung, dass die Vektor-Vier-Grundregel-Operationsinstruktion nicht auf denselben Vektor zugreift wie die vorherige Vektor-Vier-Grundregel-Operationsinstruktion.

11. Verfahren nach Anspruch 10, das des Weiteren die folgenden Schritte vor Schritt S3 umfasst:
Speichern von Vektor-Vier-Grundregel-Operationsinstruktion unter Verwendung einer Instruktions-Cache-Einheit;
Erfassen, unter Verwendung einer Instruktionsverarbeitungseinheit, einer Vektor-Vier-Grundregel-Operationsinstruktion aus den gespeicherten Vektor-Vier-Grundregel-Operationsinstruktionen;
Decodieren, unter Verwendung eines Decodiermoduls, der erfassten Vektor-Vier-Grundregel-Operationsinstruktion; und
sequentielles Speichern der decodierten Vektor-Vier-Grundregel-Operationsinstruktion.

12. Verfahren nach Anspruch 10, das des Weiteren umfasst:
Speichern des Ergebnisses der Vektor-Vier-Grundregel-Operation unter Verwendung der Speichereinheit.

13. Verfahren nach Anspruch 10,
wobei die Vektor-Vier-Grundregel-Operationsinstruktion einen Operationscode und mindestens ein Operationsfeld umfasst;
wobei der Operationscode dafür konfiguriert ist, eine Funktion der Vektor-Vier-Grundregel-Operationsinstruktion anzugeben, das Operationsfeld dafür konfiguriert ist, Dateninformationen der Vektor-Vier-Grundregel-Operationsinstruktion anzugeben, und die Vektor-Vier-Grundregel-Operationsinstruktion mindestens eine der folgenden Instruktionen umfasst:
eine Vektoradditions (VA)-Instruktion, wobei das Verfahren des Weiteren umfasst:
jeweiliges Abrufen zweier Blöcke von Vektordaten einer spezifizierten Größe von spezifizierten Adressen der Speichereinheit,
Durchführen einer Additionsoperation an den zwei Blöcken von Vektordaten in einer Vektoroperationseinheit, und
Zurückschreiben eines Ergebnisses in eine spezifizierte Adresse der Speichereinheit gemäß der Instruktion;
eine Vektor-Addier-Skalar (VA)-Instruktion, wobei das Verfahren des Weiteren
das Abrufen von Vektordaten einer spezifizierten Größe von einer spezifizierten Adresse der Speichereinheit und das Abrufen skalarer Daten von einer spezifizierten Adresse einer Skalarregisterdatei umfasst,
Addieren eines Skalars zu jedem Element eines Vektors in einer Skalaroperationseinheit und
Zurückschreiben eines Ergebnisses in eine spezifizierte Adresse der Speichereinheit gemäß der Instruktion;
eine Vektorsubtraktions (VS)-Instruktion, wobei das Verfahren des Weiteren umfasst:
jeweiliges Abrufen zweier Blöcke von Vektordaten einer spezifizierten Größe von spezifizierten Adressen der Speichereinheit,
Durchführen einer Subtraktionsoperation an den zwei Blöcken von Vektordaten in einer Vektoroperationseinheit, und
Zurückschreiben eines Ergebnisses in eine spezifizierte Adresse der Speichereinheit gemäß der Instruktion;
eine Skalar-Subtrahier-Vektor (SSV)-Instruktion, wobei das Verfahren des Weiteren umfasst:
Abrufen skalarer Daten von einer spezifizierten Adresse einer Skalarregisterdatei und Abrufen von Vektordaten von einer spezifizierten Adresse der Speichereinheit,
Subtrahieren entsprechender Elemente eines Vektors mit einem Skalar in einer Vektoroperationseinheit,
Zurückschreiben eines Ergebnisses in eine spezifizierte Adresse der Speichereinheit gemäß der Instruktion;
eine Vektor-Multiplizier-Vektor (VMV)-Instruktion, wobei das Verfahren des Weiteren umfasst:
jeweiliges Abrufen zweier Blöcke von Vektordaten einer spezifizierten Größe von spezifizierten Adressen der Speichereinheit,
Durchführen einer elementweisen Multiplikationsoperation an den zwei Blöcken von Vektordaten in einer Vektoroperationseinheit, und
Zurückschreiben eines Ergebnisses in eine spezifizierte Adresse der Speichereinheit gemäß der Instruktion;
eine Vektor-Multiplizier-Skalar (VMS)-Instruktion, wobei das Verfahren des Weiteren umfasst:
Abrufen von Vektordaten einer spezifizierten Größe von einer spezifizierten Adresse der Speichereinheit und Abrufen skalarer Daten einer spezifizierten Größe von einer spezifizierten Adresse einer Skalarregisterdatei,
Durchführen einer Vektor-Multiplizier-Skalar-Operation in einer Vektor-Operationseinheit, und
Zurückschreiben eines Ergebnisses in eine spezifizierte Adresse der Speichereinheit gemäß der Instruktion;
eine Vektordivisions (VD)-Instruktion, wobei das Verfahren des Weiteren umfasst:
jeweiliges Abrufen zweier Blöcke von Vektordaten einer spezifizierten Größe von spezifizierten Adressen der Speichereinheit,
Durchführen einer elementweisen Divisionsoperation an den zwei Blöcken von Vektordaten in einer Vektoroperationseinheit, und
Zurückschreiben eines Ergebnisses in eine spezifizierte Adresse der Speichereinheit gemäß der Instruktion; und
eine Skalar-Dividier-Vektor (SDV)-Instruktion, wobei das Verfahren des Weiteren umfasst:
Abrufen skalarer Daten von einer spezifizierten Adresse einer Skalarregisterdatei und Abrufen von Vektordaten einer spezifizierten Größe von einer spezifizierten Adresse der Speichereinheit,
Dividieren eines Skalars durch entsprechende Elemente eines Vektors in einer Vektoroperationseinheit, und
Zurückschreiben eines Ergebnisses in eine spezifizierte Adresse der Speichereinheit gemäß der Instruktion.

14. Verfahren nach Anspruch 13,
wobei die Vektoradditions (VA)-Instruktion einen einzelnen Operationscode und fünf Operationsfelder umfasst, die einer Startadresse eines Vektors 0, einer Länge des Vektors 0, einer Startadresse eines Vektors 1, einer Länge des Vektors 1 bzw. einer Adresse eines Ausgangsvektors entsprechen;
wobei die Vektor-Addier-Skalar (VAS)-Instruktion einen einzelnen Operationscode und vier Operationsfelder umfasst, die einer Startadresse eines Vektors 0, einer Länge des Vektors 0, einer Adresse eines Ausgangsvektors bzw. einem Eingangsskalar entsprechen;
wobei die Vektorsubtraktions (VS)-Instruktion einen einzelnen Operationscode und fünf Operationsfelder umfasst, die einer Startadresse eines Vektors 0, einer Länge des Vektors 0, einer Startadresse eines Vektors 1, einer Länge des Vektors 1 und einer Adresse eines Ausgangsvektors entsprechen;
wobei die Skalar-Subtrahier-Vektor (SSV)-Instruktion einen einzelnen Operationscode und vier Operationsfelder umfasst, die einer Startadresse eines Vektors 0, einer Länge des Vektors 0, einer Adresse eines Ausgangsvektors bzw. einem Eingangsskalar entsprechen;
wobei die Vektor-Multiplizier-Vektor (VMV)-Instruktion einen einzelnen Operationscode und fünf Operationsfelder umfasst, die einer Startadresse eines Vektors 0, einer Länge des Vektors 0, einer Startadresse eines Vektors 1, einer Länge des Vektors 1 bzw. einer Adresse eines Ausgangsvektors entsprechen;
wobei die Vektor-Multiplizier-Skalar (VMS)-Instruktion einen einzelnen Operationscode und vier Operationsfelder umfasst, die einer Startadresse eines Vektors 0, einer Länge des Vektors 0, einer Adresse eines Ausgangsvektors bzw. einem Eingangsskalar entsprechen;
wobei die Vektordivisions (VD)-Instruktion einen einzelnen Operationscode und fünf Operationsfelder umfasst, die einer Startadresse eines Vektors 0, einer Länge des Vektors 0, einer Startadresse eines Vektors 1, einer Länge des Vektors 1 und einer Adresse eines Ausgangsvektors entsprechen; und
wobei die Skalar-Dividier-Vektor (SDV)-Instruktion einen einzelnen Operationscode und vier Operationsfelder umfasst, die einer Startadresse eines Vektors 0, einer Länge des Vektors 0, einer Adresse eines Ausgangsvektors bzw. einem Eingangsskalar entsprechen.

## Revendications

1. Dispositif d'opération vectorielle à quatre règles fondamentales, configuré pour réaliser une opération vectorielle à quatre règles fondamentales selon une instruction d'opération vectorielle à quatre règles fondamentales, le dispositif comprenant :
une unité de stockage, configurée pour stocker des vecteurs, dans lequel l'unité de stockage est une mémoire de travail capable de prendre en charge des vecteurs de tailles différentes ;
une unité de registre, configurée pour stocker des adresses de vecteurs, dans lequel les adresses de vecteurs sont des adresses dans l'unité de stockage où les vecteurs sont stockés ;
une unité d'opération vectorielle à quatre règles fondamentales, configurée pour acquérir l'instruction d'opération vectorielle à quatre règles fondamentales, acquérir des adresses de vecteurs depuis l'unité de registre selon l'instruction d'opération vectorielle à quatre règles fondamentales, acquérir des vecteurs depuis l'unité de stockage selon les adresses de vecteurs acquises, et réaliser l'opération vectorielle à quatre règles fondamentales sur les vecteurs acquis pour obtenir un résultat de l'opération vectorielle à quatre règles fondamentales ; et
une unité de traitement de relation de dépendance configurée pour :
déterminer si l'instruction d'opération vectorielle à quatre règles fondamentales accède ou non à un même vecteur qu'une instruction d'opération vectorielle à quatre règles fondamentales précédente, avant que l'unité d'opération vectorielle à quatre règles fondamentales n'acquière l'instruction d'opération vectorielle à quatre règles fondamentales ; et
stocker l'instruction d'opération vectorielle à quatre règles fondamentales dans une file d'attente de stockage sur la base d'une détermination que l'instruction d'opération vectorielle à quatre règles fondamentales accède au même vecteur que l'instruction d'opération vectorielle à quatre règles fondamentales précédente, et fournir l'instruction d'opération vectorielle à quatre règles fondamentales dans la file d'attente de stockage pour l'unité d'opération vectorielle à quatre règles fondamentales après qu'une exécution de l'instruction d'opération vectorielle à quatre règles fondamentales précédente est achevée ; ou
fournir l'instruction d'opération vectorielle à quatre règles fondamentales pour l'unité d'opération vectorielle à quatre règles fondamentales directement, sur la base d'une détermination que l'instruction d'opération vectorielle à quatre règles fondamentales n'accède pas au même vecteur que l'instruction d'opération vectorielle à quatre règles fondamentales précédente.

2. Dispositif selon la revendication 1, comprenant en outre :
une unité de mémoire cache d'instructions, configurée pour stocker des instructions d'opération vectorielle à quatre règles fondamentales à exécuter.

3. Dispositif selon la revendication 2, comprenant en outre :
une unité de traitement d'instruction, configurée pour acquérir une instruction d'opération vectorielle à quatre règles fondamentales depuis l'unité de mémoire cache d'instructions, traiter l'instruction d'opération vectorielle à quatre règles fondamentales acquise depuis l'unité de mémoire cache d'instructions, et fournir l'instruction d'opération vectorielle à quatre règles fondamentales traitée à l'unité d'opération vectorielle à quatre règles fondamentales.

4. Dispositif selon la revendication 3, dans lequel l'unité de traitement d'instruction comprend :
un module de récupération d'instruction, configuré pour acquérir l'instruction d'opération vectorielle à quatre règles fondamentales depuis l'unité de mémoire cache d'instructions ;
un module de décodage, configuré pour décoder l'instruction d'opération vectorielle à quatre règles fondamentales acquise depuis l'unité de mémoire cache d'instructions ; et
une file d'attente d'instructions, configurée pour stocker séquentiellement l'instruction d'opération vectorielle à quatre règles fondamentales décodée.

5. Dispositif selon la revendication 1, dans lequel
l'unité de stockage est en outre configurée pour stocker le résultat de l'opération vectorielle à quatre règles fondamentales ; et
le dispositif comprend en outre une unité d'entrée/sortie, I/O, configurée pour stocker les vecteurs dans l'unité de stockage, ou acquérir le résultat de l'opération vectorielle à quatre règles fondamentales depuis l'unité de stockage.

6. Dispositif selon la revendication 1, dans lequel l'instruction d'opération vectorielle à quatre règles fondamentales comprend :
un code d'opération ; et
au moins un champ d'opération ;
dans lequel le code d'opération est configuré pour indiquer une fonction de l'instruction d'opération vectorielle à quatre règles fondamentales ;
dans lequel le champ d'opération est configuré pour indiquer des informations de données de l'instruction d'opération vectorielle à quatre règles fondamentales ; et
les informations de données comprennent un numéro d'unité de registre, et l'unité d'opération vectorielle à quatre règles fondamentales est configurée pour accéder à une unité de registre et acquérir une adresse de vecteur selon le numéro d'unité de registre.

7. Dispositif selon la revendication 1, dans lequel
l'unité d'opération vectorielle à quatre règles fondamentales comprend une section d'addition vectorielle, une section de soustraction vectorielle, une section de multiplication vectorielle, et une section de division vectorielle ; et
l'unité d'opération vectorielle à quatre règles fondamentales comporte une structure de pipeline à plusieurs étages, et la structure de pipeline à plusieurs étages comprend un pipeline de premier étage et un pipeline de deuxième étage ; dans lequel la section d'addition vectorielle et la section de soustraction vectorielle sont agencées dans le pipeline de premier étage, et la section de multiplication vectorielle et la section de division vectorielle sont agencées dans le pipeline de deuxième étage.

8. Dispositif selon la revendication 1, dans lequel l'instruction d'opération vectorielle à quatre règles fondamentales comprend au moins l'une parmi les instructions suivantes :
une instruction d'addition vectorielle, VA, dans lequel le dispositif est configuré pour extraire respectivement deux blocs de données vectorielles d'une taille spécifiée respective à partir d'adresses spécifiées de l'unité de stockage, et réaliser une opération d'addition sur les deux blocs de données vectorielles dans une unité d'opération vectorielle, et écrire un résultat à une adresse spécifiée de l'unité de stockage, selon ladite instruction ;
une instruction d'addition de vecteur et de scalaire, VAS, dans lequel le dispositif est configuré pour extraire des données vectorielles d'une taille spécifiée respective à partir d'une adresse spécifiée de l'unité de stockage, extraire des données scalaires à partir d'une adresse spécifiée d'un fichier de registre de scalaires, ajouter une valeur d'un scalaire à chaque élément d'un vecteur dans une unité d'opération scalaire, et écrire un résultat à une adresse spécifiée de l'unité de stockage, selon ladite instruction ;
une instruction de soustraction vectorielle, VS, dans lequel le dispositif est configuré pour extraire respectivement deux blocs de données vectorielles d'une taille spécifiée respective à partir d'adresses spécifiées de l'unité de stockage, réaliser une opération de soustraction sur les deux blocs de données vectorielles dans une unité d'opération vectorielle, et écrire un résultat à une adresse spécifiée de l'unité de stockage, selon ladite instruction ;
une instruction de soustraction de scalaire à vecteur, SSV, dans lequel le dispositif est configuré pour extraire des données scalaires à partir d'une adresse spécifiée d'un fichier de registre de scalaires et extraire des données vectorielles à partir d'une adresse spécifiée de l'unité de stockage, soustraire des éléments correspondant d'un vecteur à un scalaire dans une unité d'opération vectorielle, et écrire un résultat à une adresse spécifiée de l'unité de stockage, selon ladite instruction ;
une instruction de multiplication de vecteur par vecteur, VMV, dans lequel le dispositif est configuré pour extraire respectivement deux blocs de données vectorielles d'une taille spécifiée respective à partir d'adresses spécifiées de l'unité de stockage, réaliser une opération de multiplication élément par élément sur les deux blocs de données vectorielles dans une unité d'opération vectorielle, et écrire un résultat à une adresse spécifiée de l'unité de stockage, selon ladite instruction ;
une instruction de multiplication de vecteur par scalaire, VMS, dans lequel le dispositif est configuré pour extraire des données vectorielles d'une taille spécifiée respective à partir d'une adresse spécifiée de l'unité de stockage et extraire des données scalaires d'une taille spécifiée à partir d'une adresse spécifiée d'un fichier de registre de scalaires, réaliser une opération de multiplication de vecteur par scalaire dans une unité d'opération vectorielle, et écrire un résultat à une adresse spécifiée de l'unité de stockage, selon ladite instruction ;
une instruction de division vectorielle, VD, dans lequel le dispositif est configuré pour extraire respectivement deux blocs de données vectorielles d'une taille spécifiée respective à partir d'adresses spécifiées de l'unité de stockage, réaliser une opération de division élément par élément sur les deux blocs de données vectorielles dans une unité d'opération vectorielle, et écrire un résultat à une adresse spécifiée de l'unité de stockage, selon ladite instruction ; et
une instruction de division de scalaire par vecteur, SDV, dans lequel le dispositif est configuré pour extraire des données scalaires à partir d'une adresse spécifiée d'un fichier de registre de scalaires et extraire des données vectorielles d'une taille spécifiée respective à partir d'une adresse spécifiée de l'unité de stockage, diviser un scalaire par des éléments correspondants d'un vecteur dans une unité d'opération vectorielle, et écrire un résultat à une adresse spécifiée de l'unité de stockage, selon ladite instruction.

9. Dispositif selon la revendication 8,
dans lequel l'instruction d'addition vectorielle, VA, comprend un code d'opération, et cinq champs d'opération comprenant cinq numéros d'unité de registre, pour obtenir respectivement une adresse de début d'un vecteur 0, une longueur du vecteur 0, une adresse de début d'un vecteur 1, une longueur du vecteur 1, et une adresse d'un vecteur de sortie ;
dans lequel l'instruction d'addition de vecteur et de scalaire, VAS, comprend un code d'opération, et quatre champs d'opération comprenant quatre numéros d'unité de registre, pour obtenir respectivement une adresse de début d'un vecteur 0, une longueur du vecteur 0, une adresse d'un vecteur de sortie, et un scalaire d'entrée ;
dans lequel l'instruction de soustraction vectorielle, VS, comprend un code d'opération, et cinq champs d'opération comprenant cinq numéros d'unité de registre, pour obtenir respectivement une adresse de début d'un vecteur 0, une longueur du vecteur 0, une adresse de début d'un vecteur 1, une longueur du vecteur 1, et une adresse d'un vecteur de sortie ;
dans lequel l'instruction de soustraction de scalaire à vecteur, SSV, comprend un code d'opération, et quatre champs d'opération comprenant quatre numéros d'unité de registre, pour obtenir respectivement une adresse de début d'un vecteur 0, une longueur du vecteur 0, une adresse d'un vecteur de sortie, et un scalaire d'entrée ;
dans lequel l'instruction de multiplication de vecteur par vecteur, VMV, comprend un code d'opération, et cinq champs d'opération comprenant cinq numéros d'unité de registre, pour obtenir respectivement une adresse de début d'un vecteur 0, une longueur du vecteur 0, une adresse de début d'un vecteur 1, une longueur du vecteur 1, et une adresse d'un vecteur de sortie ;
dans lequel l'instruction de multiplication de vecteur par scalaire, VMS, comprend un code d'opération, et quatre champs d'opération comprenant quatre numéros d'unité de registre, pour obtenir respectivement une adresse de début d'un vecteur 0, une longueur du vecteur 0, une adresse d'un vecteur de sortie, et un scalaire d'entrée ;
dans lequel l'instruction de division vectorielle, VD, comprend un code d'opération, et cinq champs d'opération comprenant cinq numéros d'unité de registre, pour obtenir respectivement une adresse de début d'un vecteur 0, une longueur du vecteur 0, une adresse de début d'un vecteur 1, une longueur du vecteur 1, et une adresse d'un vecteur de sortie ; et
dans lequel l'instruction de division de scalaire par vecteur, SDV, comprend un code d'opération, et quatre champs d'opération comprenant quatre numéros d'unité de registre, pour obtenir respectivement une adresse de début d'un vecteur 0, une longueur du vecteur 0, une adresse d'un vecteur de sortie, et un scalaire d'entrée.

10. Procédé d'opération vectorielle à quatre règles fondamentales, configuré pour réaliser une opération vectorielle à quatre règles fondamentales selon une instruction d'opération vectorielle à quatre règles fondamentales, le procédé comprenant :
S1, le stockage de vecteurs par l'utilisation d'une unité de stockage, dans lequel l'unité de stockage est une mémoire de travail capable de prendre en charge des vecteurs de tailles différentes ;
S2, le stockage d'adresses de vecteurs par l'utilisation d'une unité de registre, dans lequel les adresses de vecteurs sont des adresses dans l'unité de stockage où les vecteurs sont stockés ; et
S3, par l'utilisation d'une unité d'opération vectorielle à quatre règles fondamentales, l'acquisition de l'instruction d'opération vectorielle à quatre règles fondamentales, l'acquisition d'adresses de vecteurs depuis l'unité de registre selon l'instruction d'opération vectorielle à quatre règles fondamentales, l'acquisition de vecteurs depuis l'unité de stockage selon les adresses de vecteurs acquises, et la réalisation de l'opération vectorielle à quatre règles fondamentales sur les vecteurs acquis pour obtenir un résultat de l'opération vectorielle à quatre règles fondamentales ;
dans lequel le procédé comprend en outre, avant l'étape S3, par l'utilisation d'une unité de traitement de relation de dépendance :
la détermination si l'instruction d'opération vectorielle à quatre règles fondamentales accède ou non à un même vecteur qu'une instruction d'opération vectorielle à quatre règles fondamentales précédente ; et
le stockage de l'instruction d'opération vectorielle à quatre règles fondamentales dans une file d'attente de stockage sur la base d'une détermination que l'instruction d'opération vectorielle à quatre règles fondamentales accède au même vecteur que l'instruction d'opération vectorielle à quatre règles fondamentales précédente, et le passage à l'étape S3 après qu'une exécution de l'instruction d'opération vectorielle à quatre règles fondamentales précédente est achevée ; ou
le passage directement à l'étape S3, sur la base d'une détermination que l'instruction d'opération vectorielle à quatre règles fondamentales n'accède pas au même vecteur que l'instruction d'opération vectorielle à quatre règles fondamentales précédente.

11. Procédé selon la revendication 10, comprenant en outre les étapes suivantes avant l'étape S3 :
le stockage d'instructions d'opération vectorielle à quatre règles fondamentales par l'utilisation d'une unité de mémoire cache d'instructions ;
l'acquisition, par l'utilisation d'une unité de traitement d'instruction, d'une instruction d'opération vectorielle à quatre règles fondamentales parmi les instructions d'opération vectorielle à quatre règles fondamentales stockées ;
le décodage, par l'utilisation d'un module de décodage, de l'instruction d'opération vectorielle à quatre règles fondamentales acquise ; et
le stockage séquentiellement de l'instruction d'opération vectorielle à quatre règles fondamentales décodée.

12. Procédé selon la revendication 10, comprenant en outre :
le stockage du résultat de l'opération vectorielle à quatre règles fondamentales par l'utilisation de l'unité de stockage.

13. Procédé selon la revendication 10,
dans lequel l'instruction d'opération vectorielle à quatre règles fondamentales comprend un code d'opération et au moins un champ d'opération ;
dans lequel le code d'opération est configuré pour indiquer une fonction de l'instruction d'opération vectorielle à quatre règles fondamentales, le champ d'opération est configuré pour indiquer des informations de données de l'instruction d'opération vectorielle à quatre règles fondamentales, et l'instruction d'opération vectorielle à quatre règles fondamentales comprend au moins l'une parmi les instructions suivantes :
une instruction d'addition vectorielle, VA, dans lequel le procédé comprend en outre
l'extraction respectivement de deux blocs de données vectorielles d'une taille spécifiée à partir d'adresses spécifiées de l'unité de stockage,
la réalisation d'une opération d'addition sur les deux blocs de données vectorielles dans une unité d'opération vectorielle, et
l'écriture d'un résultat à une adresse spécifiée de l'unité de stockage, selon ladite instruction ;
une instruction d'addition de vecteur et de scalaire, VAS, dans lequel le procédé comprend en outre :
l'extraction de données vectorielles d'une taille spécifiée à partir d'une adresse spécifiée de l'unité de stockage, l'extraction de données scalaires à partir d'une adresse spécifiée d'un fichier de registre de scalaires,
l'ajout d'une valeur d'un scalaire à chaque élément d'un vecteur dans une unité d'opération scalaire,
l'écriture d'un résultat à une adresse spécifiée de l'unité de stockage, selon ladite instruction ;
une instruction de soustraction vectorielle, VS, dans lequel le procédé comprend en outre :
l'extraction respectivement de deux blocs de données vectorielles d'une taille spécifiée respective à partir d'adresses spécifiées de l'unité de stockage,
la réalisation d'une opération de soustraction sur les deux blocs de données vectorielles dans une unité d'opération vectorielle, et
l'écriture d'un résultat à une adresse spécifiée de l'unité de stockage, selon ladite instruction ;
une instruction de soustraction de scalaire à vecteur, SSV, dans lequel le procédé comprend en outre :
l'extraction de données scalaires à partir d'une adresse spécifiée d'un fichier de registre de scalaires et l'extraction de données vectorielles à partir d'une adresse spécifiée de l'unité de stockage,
la soustraction d'éléments correspondant d'un vecteur à un scalaire dans une unité d'opération vectorielle,
l'écriture d'un résultat à une adresse spécifiée de l'unité de stockage, selon ladite instruction ;
une instruction de multiplication de vecteur par vecteur, VMV, dans lequel le procédé comprend en outre
l'extraction respectivement de deux blocs de données vectorielles d'une taille spécifiée à partir d'adresses spécifiées de l'unité de stockage,
la réalisation d'une opération de multiplication élément par élément sur les deux blocs de données vectorielles dans une unité d'opération vectorielle, et
l'écriture d'un résultat à une adresse spécifiée de l'unité de stockage, selon ladite instruction ;
une instruction de multiplication de vecteur par scalaire, VMS, dans lequel le procédé comprend en outre :
l'extraction de données vectorielles d'une taille spécifiée à partir d'une adresse spécifiée de l'unité de stockage et l'extraction de données scalaires d'une taille spécifiée à partir d'une adresse spécifiée d'un fichier de registre de scalaires,
la réalisation d'une opération de multiplication de vecteur par scalaire dans une unité d'opération vectorielle, et
l'écriture d'un résultat à une adresse spécifiée de l'unité de stockage, selon ladite instruction ;
une instruction de division vectorielle, VD, dans lequel le procédé comprend en outre
l'extraction respectivement de deux blocs de données vectorielles d'une taille spécifiée à partir d'adresses spécifiées de l'unité de stockage,
la réalisation d'une opération de division élément par élément sur les deux blocs de données vectorielles dans une unité d'opération vectorielle, et
l'écriture d'un résultat à une adresse spécifiée de l'unité de stockage, selon ladite instruction ; et
une instruction de division de scalaire par vecteur, SDV, dans lequel le procédé comprend en outre :
l'extraction de données scalaires à partir d'une adresse spécifiée d'un fichier de registre de scalaires et l'extraction de données vectorielles d'une taille spécifiée à partir d'une adresse spécifiée de l'unité de stockage,
la division d'un scalaire par des éléments correspondants d'un vecteur dans une unité d'opération vectorielle, et
l'écriture d'un résultat à une adresse spécifiée de l'unité de stockage, selon ladite instruction.

14. Procédé selon la revendication 13,
dans lequel l'instruction d'addition vectorielle, VA, comprend un code d'opération, et cinq champs d'opération correspondant respectivement à une adresse de début d'un vecteur 0, une longueur du vecteur 0, une adresse de début d'un vecteur 1, une longueur du vecteur 1, et une adresse d'un vecteur de sortie ;
dans lequel l'instruction d'addition de vecteur et de scalaire, VAS, comprend un code d'opération, et quatre champs d'opération correspondant respectivement à une adresse de début d'un vecteur 0, une longueur du vecteur 0, une adresse d'un vecteur de sortie, et un scalaire d'entrée ;
dans lequel l'instruction de soustraction vectorielle, VS, comprend un code d'opération, et cinq champs d'opération correspondant respectivement à une adresse de début d'un vecteur 0, une longueur du vecteur 0, une adresse de début d'un vecteur 1, une longueur du vecteur 1, et une adresse d'un vecteur de sortie ;
dans lequel l'instruction de soustraction de scalaire à vecteur, SSV, comprend un code d'opération, et quatre champs d'opération correspondant respectivement à une adresse de début d'un vecteur 0, une longueur du vecteur 0, une adresse d'un vecteur de sortie, et un scalaire d'entrée ;
dans lequel l'instruction de multiplication de vecteur par vecteur, VMV, comprend un code d'opération, et cinq champs d'opération correspondant respectivement à une adresse de début d'un vecteur 0, une longueur du vecteur 0, une adresse de début d'un vecteur 1, une longueur du vecteur 1, et une adresse d'un vecteur de sortie ;
dans lequel l'instruction de multiplication de vecteur par scalaire, VMS, comprend un code d'opération, et quatre champs d'opération correspondant respectivement à une adresse de début d'un vecteur 0, une longueur du vecteur 0, une adresse d'un vecteur de sortie, et un scalaire d'entrée ;
dans lequel l'instruction de division vectorielle, VD, comprend un code d'opération, et cinq champs d'opération correspondant respectivement à une adresse de début d'un vecteur 0, une longueur du vecteur 0, une adresse de début d'un vecteur 1, une longueur du vecteur 1, et une adresse d'un vecteur de sortie ; et
dans lequel l'instruction de division de scalaire par vecteur, SDV, comprend un code d'opération, et quatre champs d'opération correspondant respectivement à une adresse de début d'un vecteur 0, une longueur du vecteur 0, une adresse d'un vecteur de sortie, et un scalaire d'entrée.
